# EUROPÄISCHE PATENTSCHRIFT

(11) **EP 2 134 916 B1**
(45) Veröffentlichungstag und Bekanntmachung des Hinweises auf die Patenterteilung: **15.09.2010**
(21) Anmeldenummer: 08734638.3
(22) Anmeldetag: 18.03.2008
(51) Int. Cl.: E06B 3/667, F16B 7/04

(54) **STECKVERBINDER**
PLUG-IN CONNECTOR
CONNECTEUR À EMBOÎTEMENT

(30) Priorität: 02.04.2007 DE 202007004924 U
(43) Veröffentlichungstag der Anmeldung: 23.12.2009
(73) Patentinhaber: Kronenberg, Max, 42657 Solingen (DE); Kronenberg, Ralf M., 42781 Haan (DE)
(72) Erfinder: Kronenberg, Max, 42657 Solingen (DE); Kronenberg, Ralf M., 42781 Haan (DE)
(74) Vertreter: Ernicke, Klaus Stefan
(86) Internationale Anmeldenummer: PCT/EP2008/002123
(87) Internationale Veröffentlichungsnummer: WO 2008/119461

(56) Entgegenhaltungen:
- DE-A1- 2 627 920
- DE-U1- 9 216 955
- DE-U1- 20 101 486
- DE-U1- 29 909 413
- US-A- 4 970 840

## Beschreibung

Die Erfindung betrifft einen Steckverbinder mit den Merkmalen im Oberbegriff des Hauptanspruchs.

Ein solcher gerader Steckverbinder für Hohlprofile von Abstandhalterrahmen in Isolierglasscheiben ist aus der DE 20 2004 004 734 U1 bekannt. Er ist zweiteilig ausgebildet, wobei die U-förmigen Verbinderteile formschlüssig ineinander gesteckt und fixiert werden können. Das äußere Verbinderteil hat im Bereich der Verbindungsstelle einen Mittenanschlag, der aus vier seitlich ausgebogenen Federnasen besteht, die quer zur Wandebene eine Federbewegung ausführen. Die federnden Anschlagelemente sind an jeder Seitenwand paarweise und beidseits der Verbindungsstelle angeordnet sowie gegeneinander gerichtet. Sie befinden sich am freien Rand der Seitenwände, die in diesem Bereich eine verringerte Höhe aufweisen. Das innere Verbinderteil hat im Mittelbereich eine Absenkung und beidseits Einschnürungen, wodurch Freiräume zur Aufnahme eines Dichtmittels geschaffen werden. Durch die abgesenkten Seitenwände des äußeren Verbinderteils kann das Dichtmittel in Kontakt mit der Innenwandung der aufgeschobenen Abstandhalterhohlprofile gelangen. Durch die Absenkung der äußeren Seitenwände wird deren tragender Querschnitt verringert.

Die DE 299 09 413 U1 lehrt einen ähnlichen zweiteilige Steckverbinder, dessen U-förmige Verbinderteile mit Reibschluss zusammengesteckt werden. Der Mittenanschlag besteht aus zwei einzelnen Federnasen, die gegeneinander gerichtet beidseits der Verbindungsstelle am freien Rand einer abgesenkten Seitenwand angeordnet sind. Die beiden diagonal gegenüberliegenden Federnasen sind seitlich ausgebogen und führen eine Federbewegung quer zur Seitenwandebene aus.

Die DE 94 11 067 U1 zeigt einen einteiligen, U-förmigen Steckverbinder, bei dem der Mittelanschlag aus zwei einseitig wirkenden und gegeneinander gerichteten biegefesten Anschlagnasen besteht. Jede der Seitenwände trägt an ihrem Rand eine dieser starren Anschlagnasen, die beidseits der Verbindungsstelle angeordnet sind. Die Anschlagnasen haben eine Keilform mit einer Auflaufschräge und einer steil zurückspringenden Anschlagkante. Beim Aufschieben gleiten die Hohlprofile an der Auflaufschräge der einen Anschlagnase auf und schlagen an der Anschlagkante der anderen Anschlagnase an. Durch das Aufgleiten auf der starren Auflaufschräge werden die Hohlprofile einseitig angehoben und drehen sich dabei etwas um ihre Längsachse. Diese Bewegung bedingt außerdem ein ausreichendes Höhenspiel des Steckverbinders in den Hohlprofilen.

Die DE 201 01 486 U1 befasst sich mit einem im Querschnitt I-förmigen Steckverbinder für Hohlprofile von Abstandshalterrahmen in Isolierglasscheiben, der zwei parallele Mittelwände unterschiedlicher Breite und einen hierzu senkrecht ausgerichteten zentralen Verbindungssteg aufweist. An der unteren, breiten Mittelwand sind zwei gegenüberliegende seitlich ausgestellte Federnasen angeordnet.

Die US 4,970,840 A befasst sich mit einem einteiligen Steckverbinder für Sprossenkreuze, die im Innenraum von Isolierglasscheiben angeordnet werden. Die Sprossenkreuze bestehen aus drei Sprossenprofilen, wobei zwei querliegende Sprossenprofile an einem zentralen Sprossenprofil mit einem Gehrungsschnitt gestoßen werden. Das zentrale Sprossenprofil hat eine querliegende Durchgangsöffnung, durch die der Sprossenverbinder gesteckt wird und in der Mittelstellung durch Federrasten formschlüssig gehalten wird. Die Federrasten sind an beidseitigen zentralen Ausschnitten des Sprossenverbinders angeordnet und bestehen aus V-förmig ausgerichteten, abgewinkelten Rastnasen mit einem Höcker an der Knickstelle. Die federnden Höcker legen sich gegen die Öffnungsränder des zentralen Sprossenprofils. Auf die beidseits überstehenden Enden des stegartigen Sprossenverbinders werden die querliegenden Sprossenprofile aufgeschoben und im Klemmschluss gehalten, wobei die auf Gehrung geschnittenen drei Sprossenprofile an der Verbindungsstelle mit ihren Profilrändern zusammenstoßen.

Aus der DE 26 27 920 A1 ist ein Eckwinkel für Hohlprofile von Abstandshalterrahmen bekannt, der massive Schenkel mit Federelementen für einen klemmenden, kraftschlüssigen Halt der aufgesteckten Hohlprofile aufweist.

Die DE 92 16 955 U1 zeigt einen anderen geraden Steckverbinder für Hohlprofile von Abstandshalterrahmen, dessen Mittenanschlag von zwei diagonal gegenüberliegenden Federnasen gebildet wird, die quer zur Ebene der Seitenwände federn.

Es ist Aufgabe der vorliegenden Erfindung, einen hinsichtlich der Anschlagausbildung verbesserten Steckverbinder aufzuzeigen.

Die Erfindung löst diese Aufgabe mit den Merkmalen im Hauptanspruch.

Die beanspruchte Gestaltung des Mittenanschlags, die für einteilige und mehrteilige Steckverbinder verwendbar ist, bietet verschiedene Vorteile. Die federnden Anschlagelemente können beim Überschieben eines Hohlprofils federnd ausweichen, wobei sie sich quer zu ihrer Längserstreckung bzw. im Wesentlichen in der Ebene ihrer zugehörigen Seitenwand und um eine Biegeachse bewegen, die quer zur Längserstreckung des Steckverbinders ausgerichtet ist. Die Breite des Anschlagelements kann im Biegebereich größer als die Wanddicke sein. Hierbei genügt die Anordnung von nur zwei diagonal gegenüber liegenden Anschlagelementen, was den Widerstand beim Aufschieben der Hohlprofile verringert und andererseits für eine sichere Anschlagfunktion sorgt.

Mit den zwei einseitig wirkenden und bezüglich der Längs- und Mittelachse des Steckverbinders gegenseitig versetzten Anschlagelemente kann eine bessere Anschlagfunktion als beim Stand der Technik erzielt werden. Gegenüber Festanschlägen wird das dortige einseitige Anheben und gegenseitige Verdrehen der Hohlprofile vermieden. In der beanspruchten Ausführung können die Hohlprofile in der Anschlagstellung mit ihren Wänden fluchten. Dies ist auch günstig für die Dichtigkeit der Verbindungsstelle und für die Aufbringung eines eventuellen zusätzlichen Dichtmittels.

Gegenüber den vorbekannten paarweisen Anordnungen von vier seitlich ausgebogenen Federnasen sind der Rückhalteeffekt und die Anschlagfunktion verbessert. In der beanspruchten Ausführungsform wirkt die stehende Anschlagkante auf ein quer oder schräg liegendes Wandelement des Hohlprofils, z.B. eine randseitige Schulter des Hohlprofils und bietet eine höhere Treff- und Anlagegenauigkeit. Außerdem muss bei der beanspruchten Ausführungsform das Anschlagelement nicht ausgebogen werden. Die federnde Anschlagfunktion wird vielmehr durch die Formgebung des Anschlagelements erreicht. Hierdurch hängt die Anschlagfunktion auch nicht wie beim Stand der Technik vom Grad der Ausbiegung ab. Dort wirken die Anschlagkanten der seitlich ausgebogenen Federnasen mit parallel ausgerichteten Seitenwänden der Hohlprofile zusammen, wobei die Treffgenauigkeit vom Grad der Ausbiegung und von den vorhandenen Toleranzen abhängt. Seitlich ausgebogene Federnasen können bei ungünstigen Toleranzen überfahren oder unterfahren werden. Die beanspruchten Anschlagelemente sind demgegenüber wesentlich weniger toleranzempfindlich und bieten eine höhere Betriebs- und Anschlagsicherheit. Die von den Hohlprofilen federnd weggedrückten Anschlagelemente verkrallen sich mit ihrem Scheitel bzw. der hierdurch gebildeten Kante auch besser in der Hohlprofilwandung und verhindern zusammen mit weiteren Rückhalteelementen ein Abziehen und Lösen der Hohlprofile vom Steckverbinder.

Für die Ausweichfunktion der Anschlagelemente ist es günstig, unter den Anschlagelementen eine Ausnehmung in der Seitenwand auszubilden, die zugleich einen Wanddurchbruch darstellt. Dies ermöglicht den Durchtritt eines eventuell vorhandenen Dichtmittels, das somit im Bereich der Verbindungsstelle in Kontakt mit der benachbarten Innenwand der Hohlprofile gelangen kann und eine dreiseitige Abdichtung der Verbindungsstelle erlaubt. Die Ausnehmung kann hierbei größer als das Anschlagelement sein und dem Dichtmittel eine entsprechend vergrößerte Durchtrittsfläche bieten. Die Anordnung von nur zwei Anschlagelementen ist hierbei besonders vorteilhaft, weil die Vergrößerung der Durchtrittsfläche und der Dichtwirkung ohne Wandhöhenschwächung und ohne signifikante Einbußen bei der mechanischen Festigkeit erreicht werden kann.

Diese Funktion ist insbesondere in Verbindung mit mehrteiligen Steckverbindern günstig, bei denen das andere Verbinderteil eine Aufnahme für ein Dichtmittel aufweist. Gegenüber vorbekannten mehrteiligen Steckverbindern besteht hierbei der weitere Vorteil, dass die tragende Höhe der Seitenwand größer als beim Stand der Technik sein kann, wobei trotzdem eine gute Dichtfunktion gegeben ist. Außerdem kann beim Innenteil auf seitliche Einschnürungen verzichtet werden. Dies erlaubt es, die Größe der für das Dichtmittel vorgesehenen Freiräume zu reduzieren und damit auch die Dichtmittelmenge zu verringern. Das reduziert den Kostenaufwand und auch den Bauaufwand des Steckverbinders. Außerdem wird dessen mechanische Stabilität, insbesondere die Biegefestigkeit im Bereich der Verbindungsstelle, verbessert. Die Art der Clipsverbindung zwischen den Verbinderteilen trägt zum Verbund und zur Erhöhung der mechanischen Festigkeit bei. Der beanspruchte Steckverbinder ist auch besonders günstig herzustellen und zu handhaben.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1 und 2:: einen Steckverbinder mit einem Mittenanschlag in Draufsicht und geklappter Seitenansicht,
- Figur 3 und 4:: den Steckverbinder von Figur 1 und 2 mit einem auf einer Seite aufgeschobenen Hohlprofil,
- Figur 5:: einen Querschnitt durch den Steckverbinder und das Hohlprofil gemäß Schnittlinie V-V von Figur 3 und
- Figur 6 bis 9:: vergrößerte Detaildarstellungen des Mittenanschlags mit und ohne Dichtmittel in zwei Varianten.

Die Erfindung betrifft einen Steckverbinder (1), insbesondere einen geraden Steckverbinder, für Hohlprofile (2) von Abstandshalterrahmen für Isolierglasscheiben. Der Steckverbinder (1) kann einteilig sein. Er kann alternativ aus zwei oder mehr Verbinderteilen(3,4) bestehen. In den Ausführungsbeispielen ist ein zweiteiliger Steckverbinder beispielsweise dargestellt, der aus einem inneren Verbinderteil (3) und einem äußeren Verbinderteil (4) besteht, die formschlüssig zusammengesteckt werden können und durch eine formschlüssige Verbindung (5) in der Steckposition arretierbar sind.

Der einteilige Steckverbinder (1) oder das äußere Verbinderteil (4) hat einen im wesentlichen U-förmige oder kastenförmigen Querschnitt, der aus Seitenwänden (15,16) und ein oder mehreren Mittelwänden (14) besteht.

In den gezeigten Ausführungsbeispielen ist eine U-Form vorhanden, wobei die Seitenwände (15,16) am einen Rand durch eine Mittelwand (14) oder einen Quersteg miteinander verbunden sind. Die Einbaulage des Steckverbinders (1) in den beidseits aufgesteckten Hohlprofilen (2) ist beliebig wählbar. Im gezeigten Ausführungsbeispiel weist die Mittelwand (14) zum Bodenbereich der Hohlprofile (2) und zur Rahmeninnenseite bzw. zur Innenseite der Isolierglasscheibe.

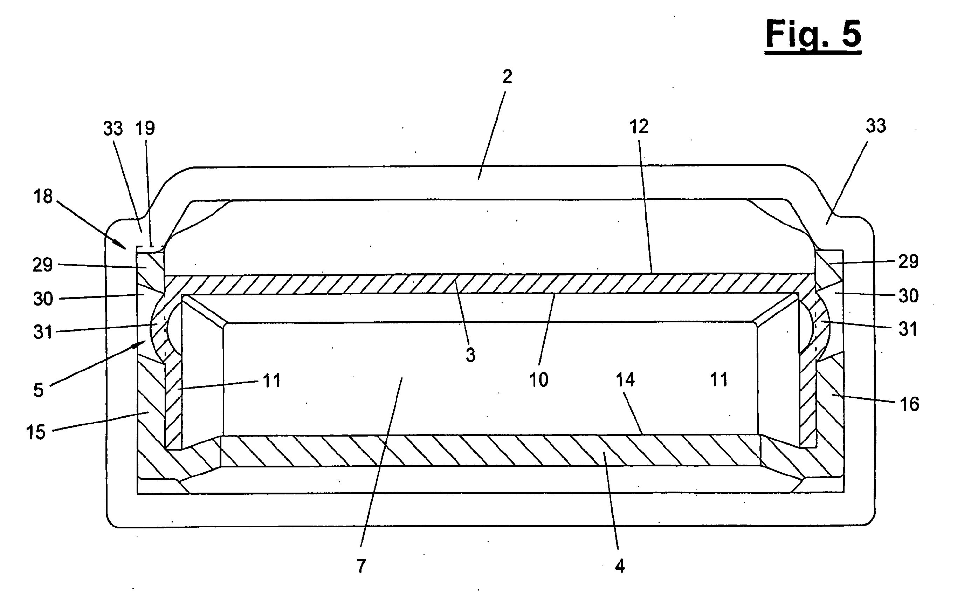

Bei dem gezeigten mehrteiligen Steckverbinder (1) kann das Innenteil (3) ebenfalls einen U-förmigen oder kastenförmigen Querschnitt mit zwei Seitenwänden (11) und mindestens einer Mittelwand (10) aufweisen. In der zusammengesteckten Lage liegen die Seitenwände (11,15,16) benachbart und im Wesentlichen parallel nebeneinander, wobei die Mittelwand (11) des Innenteils (3) bei der gezeigten Ausführungsform zur Rahmenaußenseite und zum Dachbereich der Hohlprofile (2) weist. Figur 5 verdeutlicht in einem Querschnitt diese Anordnung.

Der einteilige Steckverbinder (1) oder das Außenteil (4) weist einen Mittenanschlag (18) auf, der an der vorgesehenen Verbindungsstelle (8) der Hohlprofile (2) angeordnet ist. Die Verbindungsstelle (8) ist vorzugsweise zugleich die Mitte des Steckverbinders (1) in Längsrichtung. Die Längsachse des Steckverbinders (1) bzw. seiner Verbinderteile (3,4) trägt die Bezugsziffer (9). Der Mittenanschlag (18) weist zwei federnde Anschlagelemente (19,20) auf, die am Randbereich (17) der Seitenwände (15,16) des Steckverbinders (1) oder des Außenteils (4) angeordnet sind. Bei der gezeigten Ausführungsform ist dies der freie Rand der Seitenwände (15,16). Die beiden Anschlagelemente (19,20) sind als einseitig wirkende federnde Anschlagnasen oder Federnasen ausgebildet. Sie sind gegeneinander gerichtet und beidseits der Verbindungsstelle (8) jeweils an einer Seitenwand (15,16) angeordnet. Die Anschlagelemente (19,20) sind dadurch gegeneinander bezüglich der Mittelachse oder Verbindungsstelle (8) und der Verbinderlängsachse (9) versetzt angeordnet.

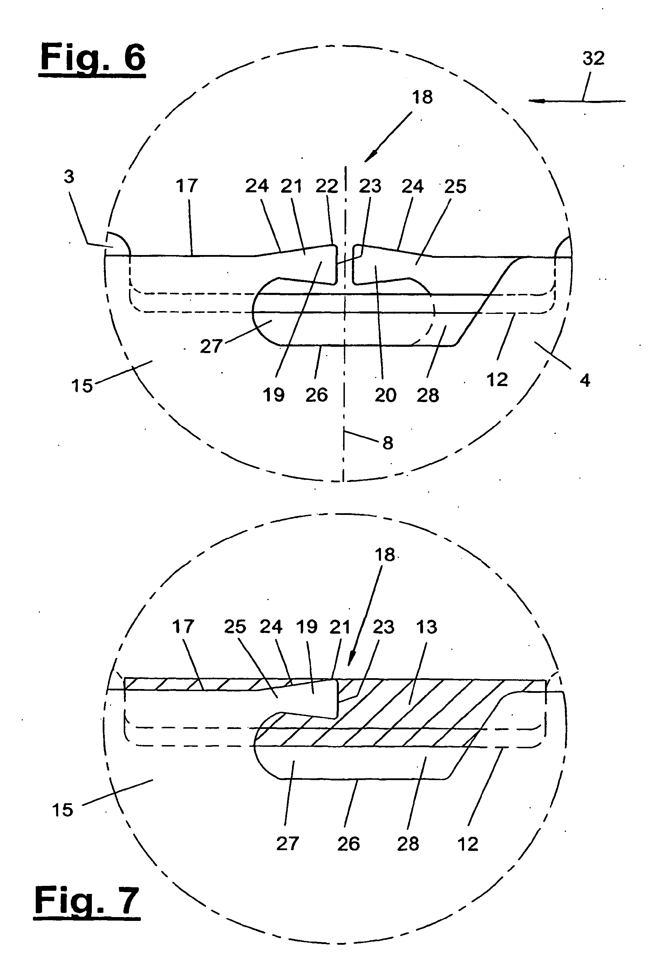

Die Anschlagelemente (19,20) liegen im Wesentlichen in der Ebene ihrer zugehörigen Seitenwand (15,16) und bewegen sich bei ihrer Federbewegung auch im Wesentlichen in dieser Ebene. Die Seitenwände (15,16) weisen unter ihrem Anschlagelement (19,20) jeweils eine Ausnehmung (26) auf. Das Anschlagelement (19,20) kann dabei aus seiner Seitenwand (15,16) freigeschnitten sein und einen Bestandteil der Seitenwand (15,16) bilden. Die Anschlagelemente (19,20) können die gleiche Wanddicke wie die zugehörige Seitenwand (15,16) haben. Wie Figur 6, 7 und 8, 9 verdeutlichen, kann die Ausnehmung (26) eine größere Länge als das Anschlagelement (19,20) aufweisen und sich über die Verbindungsstelle (8) hinaus erstrecken. Hierdurch wird unter dem Anschlagelement (19,20) ein Freiraum (27) und jenseits der Verbindungsstelle (8) eine Freidistanz (28) vor dem Anschlagelement (19,20) gebildet. Die Ausnehmungskante am Rand der Freidistanz (28) kann als kerbgünstiger schräger Anstieg und Übergang in den anschließenden freien Rand (17) der jeweiligen Seitenwand (15,16) ausgebildet sein. Die Ausnehmung (26) hat im Bodenbereich eine im Wesentlichen gerade Kante, die sich längs der Verbinderachse (9) erstreckt. Der Freiraum (27) hat eine kerbgünstige runde Ausnehmungskontur. Im Bereich der Freidistanz (28) ist die Ausnehmung (26) nach oben in Richtung zum Rand (17) offen.

Das Anschlagelement (19,20) weist an seinem der Verbindungsstelle (8) zugewandten Ende einen Scheitel (22) auf, der oberhalb des Randes (17) liegt. Das Anschlagelement (19,20) besitzt ein keilförmiges Kopfteil, welches zur Verbindungsstelle (8) hin sich verbreitert und an der gegenüberliegenden Rückseite eine Einschnürung (25) oder eine Verjüngung aufweist. Diese kann eine Breite aufweisen, die größer als die Seitenwanddicke ist. Durch die Einschnürung (25) wird eine Wandschwächung gebildet und die federnde Nachgiebigkeit des Kopfteils (21) verbessert.

Das Kopfteil (21) weist an seiner zur Verbindungsstelle (8) gerichteten Vorderseite eine aufrechte Anschlagkante (23) auf, die sich vorzugsweise in gerader Linie und quer zur Verbinderlängsachse (9) sowie zur Einsteckrichtung (32) erstreckt. Die Anschlagkante (23) geht am Scheitel (22) in eine Auflaufschräge (24) an der Oberseite des Kopfteils (21) über. Die Anschlagkante (23) ragt durch das verbreiterte Kopfteil (21) nach oben über den Rand (17) hinaus und bildet dadurch einen sicheren Anschlag für das in Einsteckrichtung (32) aufgeschobene Hohlprofil (2).

Wie Figur 5 verdeutlicht, ist der ein- oder mehrteilige Steckverbinder in seiner Formgebung an die Innenform der Hohlprofile (2) angepasst. Insbesondere ist die Höhe der außenliegenden Seitenwände (15,16) an die Profilinnenhöhe angepasst. Das Hohlprofil (2) kann einen im Wesentlichen rechteckigen Querschnitt haben. Es kann auch im Dachbereich den im Ausführungsbeispiel dargestellten beidseitigen Einzug und abgewinkelten Übergang zwischen der Seitenwand und der Dachwand aufweisen. Hierdurch wird eine Schulter (33) gebildet, die einen zumindest bereichsweise quer zur Seitenwand verlaufenden Wandbereich aufweist, an dem die Anschlagelemente (19,20) angreifen.

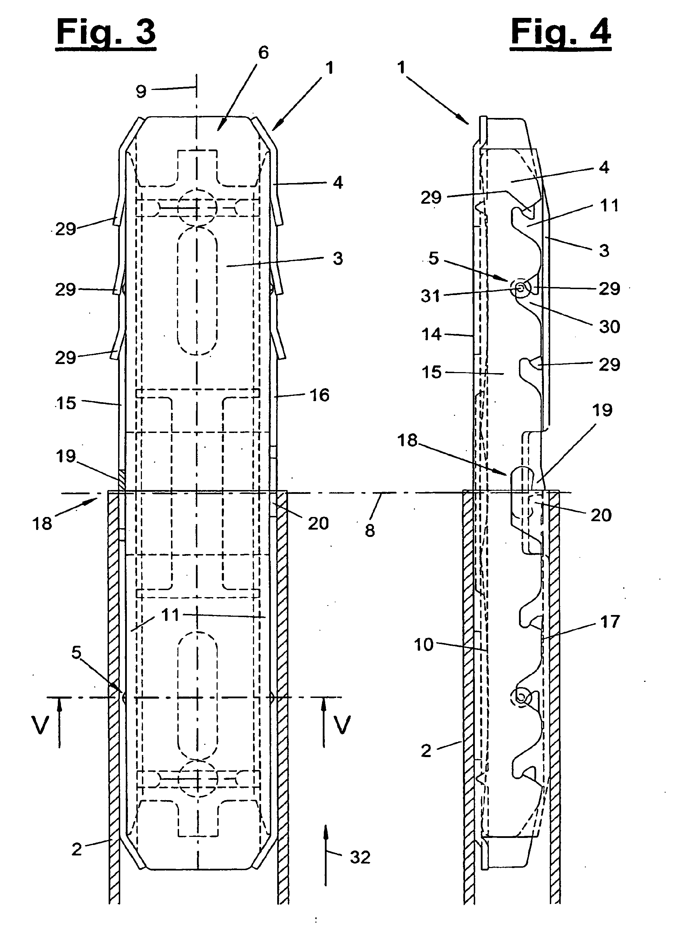

Wie Figur 3 bis 5 verdeutlichen, überfährt das z.B. auf den unteren Schenkelbereich des Steckverbinders (1) zuerst aufgesteckte Hohlprofil (2) das Anschlagelement (20) an der Seitenwand (16) und drückt dieses beim Aufgleiten auf seiner Auflaufschräge (24) federnd nach unten in die Ausnehmung (26). Die Anschlagkante (23) der beiden Anschlagelemente (19,20) sind ein kleines Stück von der Verbindungsstelle (8) axial distanziert. Nach Überfahren des Anschlagelements (20) schlägt das Hohlprofil (2) mit seiner Schulter (33) an der Anschlagkante (23) des anderen Anschlagelements (19) an. Wenn anschließend das andere Hohlprofil (nicht dargestellt) auf den anderen Verbinderschenkel aufgeschoben wird, drückt dieses mit seiner Schulter (33) das Anschlagelement (19) nach unten in die Ausnehmung (26) und schlägt mit seiner Stirnseite dann am ersten Hohlprofil (2) an. Hierdurch kann ein dichter und im Wesentlichen fugenfreier Anschluss der Hohlprofile (2) gebildet werden.

Der Steckverbinder (1) kann im Bereich der Verbindungsstele (8) eine Aufnahme (12) für ein Dichtmittel (13) aufweisen. Das Dichtmittel (13) kann eine unterschiedliche Konsistenz und Formgebung haben. Es kann z.B. aus einer plastischen Butylmasse bestehen. Es kann alternativ als elastisch formbares Dichtkissen aus einem Schaum-Kunstoff oder dergleichen bestehen. Das Dichtmittel (13) kann herstellerseitig auf den Verbinder (1) appliziert sein. Alternativ kann es nachträglich und insbesondere beim Aufstecken der Hohlprofile (2) angebracht oder eingefüllt werden.

Die Aufnahme (12) kann bei einem einteiligen Steckverbinder (1) (nicht dargestellt) beispielsweise durch eine verkürzte Dachwand gebildet werden, die sich quer zwischen den Seitenwänden (15,16) erstreckt. Bei einem mehrteiligen Steckverbinder (1) kann wie in der gezeigten Ausführungsform das Innenteil (3) an seiner nach außen weisenden Mittelwand (10) eine muldenförmige Absenkung aufweisen, welche die Aufnahme (12) für das Dichtmittel (13) bildet. Die Aufnahme (12) kann sich beidseits bis zu den außenliegenden Seitenwänden (15,16) erstrecken. Die Aufnahme (12) und das Dichtmittel (13) liegen zumindest bereichsweise auf Höhe des Mittenanschlags (18) und der Ausnehmung (26). Figur 7 verdeutlicht diese Ausführung. Hierdurch kann das Dichtmittel (13) die Ausnehmung (26) zumindest bereichsweise durchdringen und in Kontakt mit der benachbarten Innenwandung der Hohlprofile (2) gelangen. Um diese Durchdringung zu erreichen, kann das Dichtmittel (13) im Ausgangszustand ein Übermaß aufweisen und durch die aufgeschobenen Hohlprofile (2) und die einhergehende räumliche Verengung zur Seite hin verdrängt werden.

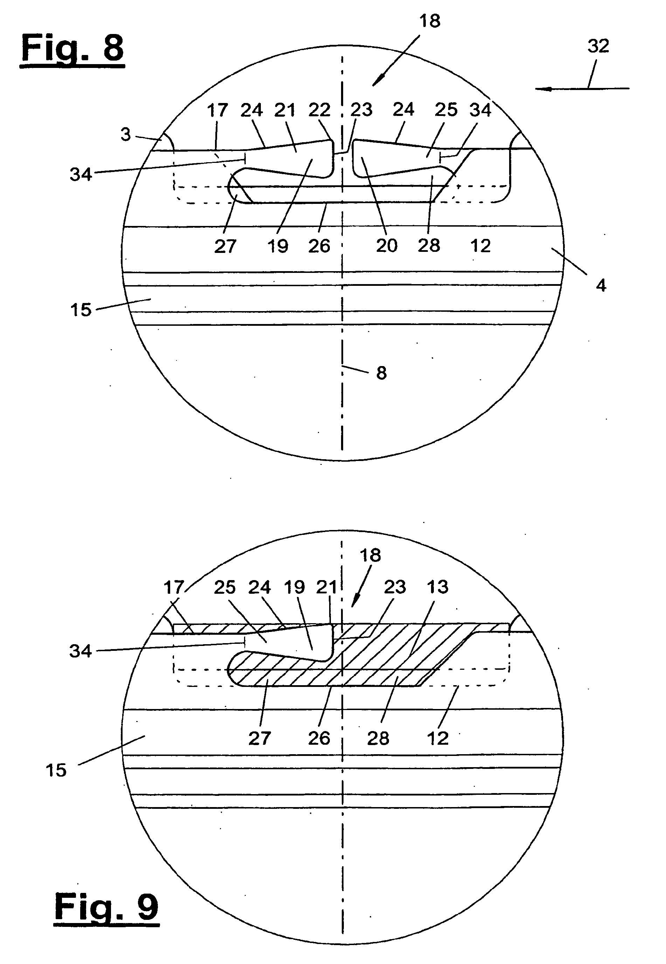

In den Varianten von Figur 6, 7 und 8, 9 haben der Freiraum (27) und die Ausnehmung (26) eine unterschiedliche Höhe. In der Ausführung von Figur 6 und 7 reichen sie tiefer hinab bis unter den Rand der Aufnahme oder Absenkung (12), wodurch eine große Öffnung für den Durchtritt des Dichtmittels (13) gebildet wird. Bei Figur 8 und 9 liegt der Unterrand der Ausnehmung (26) höher und etwa bündig mit der Unterkante der Aufnahme (12). Die Ausnehmung (26) hat dadurch zwar eine kleinere Größe, wobei andererseits die Steghöhe der Seitenwand (15,16) vergrößert wird, was für die Verbinderstabilität unter Biegebelastung günstig ist.

Figur 8 und 9 verdeutlichen außerdem eine Ausführung, in der die Anschlagelemente (19,20) an einer z.B. vertikalen oder schrägen Biegekante (34) seitlich nach außen leicht abgebogen sein können. Die Anschlagelemente (19,20) sind dabei seitlich etwas aus ihrer Seitenwandebene ausgestellt. Hierbei behalten sie ihre federnde Ausweichfähigkeit in der Höhe bzw. in der Ebene ihrer zugehörigen Seitenwand (15,16).

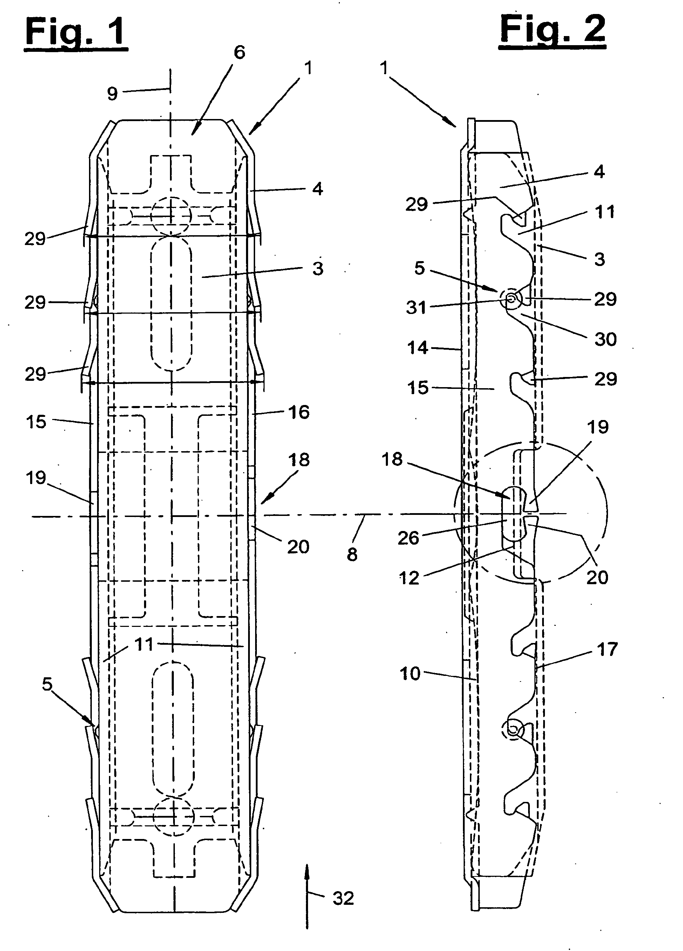

Die formschlüssige Verbindung (5) der inneren und äußeren Verbinderteile (3,4) kann in beliebig geeigneter Weise und z.B. entsprechend der DE 20 2004 004 734 U1 ausgestaltet sein. In der gezeigten Ausführungsform ist eine andere Variante dargestellt, in der das innere Verbinderteil (2,3) an den Seitenwänden (11) beidseits der Verbindungsstelle (8) mindestens einen nach außen gerichteten Vorsprung (10) aufweist, der z.B. als Wölbung oder Ausbeulung der Seitenwand (11) ausgebildet ist. Das äußere Verbindungsteil (4) kann an seinen außenliegenden Seitenwänden (15,16) und insbesondere an deren Rand (17) ein oder mehrere Rückhalteelemente (29) aufweisen, die z.B. als freigeschnittene und seitlich ausgebogene Federnasen ausgebildet sind. Wie Figur 1 und 2 verdeutlichen, können die Rückhalteelemente (29) unterschiedliche Höhenlagen gegenüber der Mittelwand (14) aufweisen und unterschiedlich weit seitlich ausgestellt sein. Sie greifen hierdurch in verschiedenen Spuren an der Hohlprofilinnenwandung an. Durch den Freischnitt entsteht unter den Rückhalteelementen (29) eine Wandöffnung (30), die zum Rand (17) hin reicht und von dort zugänglich ist. Durch diese Wandöffnung (30) kann der Vorsprung (31), der z.B. als Clipsnoppe ausgebildet ist, formschlüssig eingreifen und unter dem Rückhalteelement (29) festgehalten werden. Die Rückhalteelemente (29) an den beiden Schenkeln beidseits der Verbindungsstelle (8) sind gegeneinander gerichtet, so dass die Vorsprünge (31) und die Wandöffnungen (30) eine formschlüssige und die Verbinderteillage sichernde Clipsverbindung bilden.

Der Steckverbinder (1) bzw. seine Verbinderteile (3,4) können aus einem beliebig geeigneten Werkstoff bestehen, z.B. aus Kunstoff, Metall oder anderen Materialien, wobei auch Verbundwerkstoffe möglich sind. In den gezeigten Ausführungsformen handelt es sich um Stanz- und Biegeteile aus einem dünnwandigen Stahlblech. Kunstoffteile können gespritzt oder gegossen werden. Auch gegossene Metallteile sind möglich.

Der ein- oder mehrteilige Steckverbinder (1) kann wahlweise offene oder geschlossene Stirnseiten (6) aufweisen. Im Innenbereich kann er einen Hohlraum (7) besitzen. Bei offenen Stirnseiten (6) ist dadurch ein Durchfluss des in den Hohlprofilen (2) befindlichen granulierten Trocknungsmittels über die Verbindungsstelle (8) hinweg möglich.

Abwandlungen der gezeigten und beschriebenen Ausführungsformen sind in verschiedener Weise möglich. Zum einen kann die Einbaulage umgekehrt sein, wobei die Mittelwand (14) zur Rahmenaußenseite und zum Dachbereich der Hohlprofile (2) weist und die Anschlagelemente (19,20) mit der Bodenwandung der Hohlprofile (2) in Eingriff treten. Der Steckverbinder (1) kann in der eingangs erwähnten Weise einteilig ausgebildet sein. Der Steckverbinder (1) muss außerdem kein Dichtmittel (13) aufweisen. In weiterer Abwandlung kann der ein- oder mehrteilige Steckverbinder (1) mehr als zwei Anschlagelemente (19,20) aufweisen. Hierbei können z.B. vier Anschlagelemente vorhanden sein, die an jeder Seitenwand (15,16) paarweise angeordnet sind und einander an der Verbindungsstelle (8) gegenüber liegen. Die Keilform des Kopfteils (21) der Anschlagelemente (19,20) mit dem erhabenen Scheitel (22) und der Einschnürung (25) mit der verbesserten Federwirkung in Höhenrichtung der Seitenwand (15,16) hat eigenständige erfinderische Bedeutung und ist von der Zahl, Anordnung und evtl. seitlichen Ausstellung der Anschlagelemente (19,20) und des hierdurch gebildeten Mittenanschlags (8) unabhängig. Der Mittenanschlag (18) kann außerdem noch weitere und vorzugsweise federnde Anschlagelemente an anderen Stellen des ein- oder mehrteiligen Steckverbinders (1), z.B. an der außenliegenden Mittelwand (14), aufweisen. Ferner kann der Steckverbinder (1) geschlossene Stirnseiten (6) und einen durch Querstege oder dergleichen gegen Granulatdurchfluss versperrten Innenraum besitzen. Ferner lässt sich der gezeigte und beschriebene Mittenanschlag (18) auch für Steckverbinder für Sprossenprofile oder dergleichen einsetzen.

### BEZUGSZEICHENLISTE

- 1: Steckverbinder
- 2: Hohlprofil
- 3: Verbinderteil, Innenteil, Oberteil
- 4: Verbinderteil, Außenteil, Unterteil
- 5: formschlüssige Verbindung, Clipsverbindung
- 6: Stirnseite
- 7: Hohlraum
- 8: Mittelachse, Verbindungsstelle
- 9: Verbinderlängsachse
- 10: Mittelwand Innenteil
- 11: Seitenwand Innenteil
- 12: Aufnahme, Absenkung
- 13: Dichtmittel
- 14: Mittelwand Außenteil
- 15: Seitenwand Außenteil
- 16: Seitenwand Außenteil
- 17: Randbereich, Rand der Seitenwand
- 18: Mittenanschlag
- 19: Anschlagelement, Federnase
- 20: Anschlagelement, Federnase
- 21: Kopfteil
- 22: Scheitel
- 23: Anschlagkante
- 24: Auflaufschräge
- 25: Einschnürung, Verjüngung
- 26: Ausnehmung, Ausschnitt
- 27: Freiraum unter Federnase
- 28: Freidistanz vor Federnase
- 29: Rückhalteelement, Rückhaltenase
- 30: Wandöffnung, Aufnahmeöffnung, Clipsöffnung
- 31: Vorsprung, Clipsnoppe, Ausprägung
- 32: Einsteckrichtung
- 33: Schulter
- 34: Biegekante

## Patentansprüche

1. Steckverbinder für Hohlprofile (2) von Abstandshalterrahmen für Isolierglasscheiben, wobei der Steckverbinder (1) mindestens ein Verbinderteil (3,4) mit einem im wesentlichen U-förmigen oder kastenförmigen Querschnitt mit Seitenwänden (15,16) und mindestens einer Mittelwand (14) sowie an der Verbindungsstelle (8) einen Mittenanschlag (18) aus mehreren federnden Anschlagelementen (19,20) am Randbereich (17) der Seitenwände (15,16) aufweist, wobei der Mittenanschlag (18) zwei oder mehr gegeneinander gerichtete Anschlagelemente (19,20) aufweist, die beidseits der Verbindungsstelle (8) jeweils an einer Seitenwand (15,16) angeordnet sind, **dadurch gekennzeichnet, dass** die Anschlagelemente (19,20) im wesentlichen in der Ebene ihrer zugehörigen Seitenwand (15,16) federn.

2. Steckverbinder nach Anspruch 1, **dadurch gekennzeichnet, dass** der Mittenanschlag (18) zwei gegeneinander gerichtete einzelne Anschlagelemente (19,20) aufweist.

3. Steckverbinder nach Anspruch 1 oder 2, **dadurch gekennzeichnet, dass** die Seitenwand (15,16) unter dem Anschlagelement (19,20) eine Ausnehmung (26) aufweist.

4. Steckverbinder nach Anspruch 1, 2 oder 3, **dadurch gekennzeichnet, dass** das Anschlagelement (19,20) aus der Seitenwand (15,16) freigeschnitten ist.

5. Steckverbinder nach einem der vorhergehenden Ansprüche, **dadurch gekennzeichnet, dass** die Ausnehmung (26) eine größere Länge als das Anschlagelement (19,20) aufweist und über die Verbindungsstelle (8) reicht.

6. Steckverbinder nach einem der vorhergehenden Ansprüche, **dadurch gekennzeichnet, dass** das Anschlagelement (19,20) einen Scheitel (22) aufweist, der über dem Rand (17) der Seitenwand (15,16) liegt.

7. Steckverbinder insbesondere nach einem der vorhergehenden Ansprüche, **dadurch gekennzeichnet, dass** das Anschlagelement (19,20) ein keilförmiges und zur Verbindungsstelle (8) hin sich verbreiterndes Kopfteil (21) aufweist.

8. Steckverbinder nach einem der vorhergehenden Ansprüche, **dadurch gekennzeichnet, dass** das Kopfteil (21) rückseitig eine Einschnürung (25) aufweist.

9. Steckverbinder nach einem der vorhergehenden Ansprüche, **dadurch gekennzeichnet, dass** das Kopfteil (21) an der Vorderseite eine zur Verbindungsstelle (8) gerichtete aufrechte Anschlagkante (23) und an der Oberseite eine Auflaufschräge (24) aufweist.

10. Steckverbinder nach einem der vorhergehenden Ansprüche, **dadurch gekennzeichnet, dass** das Anschlagelement (19,20) seitlich etwas aus seiner Seitenwandebene ausgestellt ist.

11. Steckverbinder nach einem der vorhergehenden Ansprüche, **dadurch gekennzeichnet, dass** an den Seitenwänden (15,16) mindestens ein Rückhalteelement (29) mit einer Wandöffnung (30) angeordnet ist.

12. Steckverbinder nach einem der vorhergehenden Ansprüche, **dadurch gekennzeichnet, dass** der Steckverbinder aus mindestens zwei zusammensteckbaren Verbinderteilen (3,4) mit einem im wesentlichen U-förmigen oder kastenförmigen Querschnitt besteht, wobei der Mittenanschlag (18) am äußeren Verbinderteil (4) angeordnet ist.

13. Steckverbinder nach einem der vorhergehenden Ansprüche, **dadurch gekennzeichnet, dass** das innere Verbinderteil (3) im Bereich der Verbindungsstelle (8) eine Aufnahme (12) für ein verformbares Dichtmittel (13) aufweist.

14. Steckverbinder nach einem der vorhergehenden Ansprüche, **dadurch gekennzeichnet, dass** die Verbinderteile (3,4) eine formschlüssige Verbindung (5) aufweisen.

15. Steckverbinder nach einem der vorhergehenden Ansprüche, **dadurch gekennzeichnet, dass** die Verbinderteile (3,4) in Steckstellung benachbarte Seitenwände (11,15,16) aufweisen, wobei das innere Verbinderteil (3) an den Seitenwänden (11) mindestens einen Vorsprung (31) aufweist, der in eine Wandöffnung (30) unter einem Rückhalteelement (29) des äußeren Verbinderteils (4) greift.

## Claims

1. Plug-in connector for hollow profiles (2) of spacer frames for insulating glass panes, wherein the plug-in connector (1) has at least one connector part (3, 4) with a substantially U-shaped or box-shaped cross section with side walls (15, 16) and at least one central wall (14) and, at the connection point (8), a central stop (18) comprising a plurality of resilient stop elements (19, 20) at the edge region (17) of the side walls (15, 16), wherein the central stop (18) comprises two or more stop elements (19, 20) which are directed towards one another and which are arranged on both sides of the connection point (8) on a respective side wall (15, 16), **characterized in that** the stop elements (19, 20) are resilient substantially in the plane of their associated side wall (15, 16).

2. Plug-in connector according to Claim 1, **characterized in that** the central stop (18) comprises two individual stop elements (19, 20) directed towards one another.

3. Plug-in connector according to Claim 1 or 2, **characterized in that** the side wall (15, 16) has a recess (26) under the stop element (19, 20).

4. Plug-in connector according to Claim 1, 2 or 3, **characterized in that** the stop element (19, 20) is cut free from the side wall (15, 16).

5. Plug-in connector according to one of the preceding claims, **characterized in that** the recess (26) has a greater length than the stop element (19, 20) and extends over the connection point (8).

6. Plug-in connector according to one of the preceding claims, **characterized in that** the stop element (19, 20) has an apex (22) which lies above the edge (17) of the side wall (15, 16).

7. Plug-in connector in particular according to one of the preceding claims, **characterized in that** the stop element (19, 20) has a wedge-shaped head part (21) which widens towards the connection point (8).

8. Plug-in connector according to one of the preceding claims, **characterized in that** the head part (21) has a constriction (25) on the rear side.

9. Plug-in connector according to one of the preceding claims, **characterized in that** the head part (21) has a vertical stop edge (23) directed towards the connection point (8) on the front side and a run-on slope (24) on the upper side.

10. Plug-in connector according to one of the preceding claims, **characterized in that** the stop element (19, 20) is flared laterally somewhat from its side wall plane.

11. Plug-in connector according to one of the preceding claims, **characterized in that** at least one retaining element (29) with a wall opening (30) is arranged on the side walls (15, 16).

12. Plug-in connector according to one of the preceding claims, **characterized in that** the plug-in connector comprises at least two connector parts (3, 4) which can be plugged together and which have a substantially U-shaped or box-shaped cross section, wherein the central stop (18) is arranged on the outer connector part (4).

13. Plug-in connector according to one of the preceding claims, **characterized in that** the inner connector part (3) has a receptacle (12) for a deformable sealant (13) in the region of the connection point (8).

14. Plug-in connector according to one of the preceding claims, **characterized in that** the connector parts (3, 4) have a positive connection (5).

15. Plug-in connector according to one of the preceding claims, **characterized in that** the connector parts (3, 4) have adjacent side walls (11, 15, 16) in the plugged-in position, wherein the inner connector part (3) has, on the side walls (11), at least one projection (31) which engages in a wall opening (30) below a retaining element (29) of the outer connector part (4).

## Revendications

1. Connecteur à emboîtement pour profilés creux (2) de cadres d'écartement pour des vitrages isolants, dans lequel le connecteur à emboîtement (1) présente au moins une pièce de connecteur (3, 4) avec une section transversale essentiellement en forme de U ou de caisson avec des parois latérales (15, 16) et au moins une paroi centrale (14) ainsi que, au point de connexion (8), une butée centrale (18) composée de plusieurs éléments de butée élastiques (19, 20) sur la région de bord (17) des parois latérales (15, 16), dans lequel la butée centrale (18) présente deux éléments de butée (19, 20), ou plus, dirigés l'un vers l'autre, qui sont disposés de part et d'autre du point de connexion (8), chacun sur une paroi latérale (15, 16), **caractérisé en ce que** les éléments de butée (19, 20) font ressort essentiellement dans le plan de leur paroi latérale correspondante (15, 16).

2. Connecteur à emboîtement selon la revendication 1, **caractérisé en ce que** la butée centrale (18) présente deux éléments de butée individuels (19, 20) dirigés l'un vers l'autre.

3. Connecteur à emboîtement selon la revendication 1 ou 2, **caractérisé en ce que** la paroi latérale (15, 16) présente un évidement (26) sous l'élément de butée (19, 20).

4. Connecteur à emboîtement selon la revendication 1, 2 ou 3, **caractérisé en ce que** l'élément de butée (19, 20) est découpé dans la paroi latérale (15, 16).

5. Connecteur à emboîtement selon l'une quelconque des revendications précédentes, **caractérisé en ce que** l'évidement (26) présente une plus grande longueur que l'élément de butée (19, 20) et s'étend au-delà du point de connexion (8).

6. Connecteur à emboîtement selon l'une quelconque des revendications précédentes, **caractérisé en ce que** l'élément de butée (19, 20) présente un pic (22), qui est situé au-dessus du bord (17) de la paroi latérale (15, 16).

7. Connecteur à emboîtement selon l'une quelconque des revendications précédentes, **caractérisé en ce que** l'élément de butée (19, 20) présente une partie de tête (21) en forme de coin et s'élargissant en direction du point de connexion (8).

8. Connecteur à emboîtement selon l'une quelconque des revendications précédentes, **caractérisé en ce que** la partie de tête (21) présente un rétrécissement (25) du côté arrière.

9. Connecteur à emboîtement selon l'une quelconque des revendications précédentes, **caractérisé en ce que** la partie de tête (21) présente sur le côté avant une face de butée droite (23) tournée vers le point de connexion (8) et sur le côté supérieur une rampe d'engagement (24).

10. Connecteur à emboîtement selon l'une quelconque des revendications précédentes, **caractérisé en ce que** l'élément de butée (19, 20) est légèrement saillant latéralement hors du plan de sa paroi latérale.

11. Connecteur à emboîtement selon l'une quelconque des revendications précédentes, **caractérisé en ce qu'**au moins un élément de retenue (29) avec une ouverture de paroi (30) est disposé sur les parois latérales (15, 16).

12. Connecteur à emboîtement selon l'une quelconque des revendications précédentes, **caractérisé en ce que** le connecteur à emboîtement se compose d'au moins deux pièces de connecteur emboîtables (3, 4), avec une section transversale essentiellement en forme de U ou de caisson, dans lequel la butée centrale (18) est disposée sur la pièce de connecteur extérieure (4).

13. Connecteur à emboîtement selon l'une quelconque des revendications précédentes, **caractérisé en ce que** la pièce de connecteur intérieure (3) présente, dans la région du point de connexion (8), un logement (12) pour un moyen d'étanchéité déformable (13).

14. Connecteur à emboîtement selon l'une quelconque des revendications précédentes, **caractérisé en ce que** les pièces de connecteur (3, 4) présentent un assemblage par complémentarité de forme (5).

15. Connecteur à emboîtement selon l'une quelconque des revendications précédentes, **caractérisé en ce que** les pièces de connecteur (3, 4) présentent à l'état emboîté des parois latérales adjacentes (11, 15, 16), dans lequel la pièce de connecteur intérieure (3) présente sur les parois latérales (11) au moins une saillie (31), qui s'engage dans une ouverture de paroi (30) en dessous d'un élément de retenue (29) de la pièce de connecteur extérieure (4).
